(19) **Europäisches Patentamt**

**European Patent Office**

**Office européen des brevets**

(11) **EP 0 821 501 B1**

(12) **FASCICULE DE BREVET EUROPEEN**

(45) Date de publication et mention
de la délivrance du brevet:
**12.05.2004 Bulletin 2004/20**

(51) Int Cl.$^7$: **H04L 1/02**

(21) Numéro de dépôt: **97401753.5**

(22) Date de dépôt: **21.07.1997**

(54) **Procédé de démodulation numérique**

Verfahren zur digitalen Demodulation

Method of digital demodulation

(84) Etats contractants désignés:
**AT BE CH DE DK ES FI GB GR IE IT LI LU MC NL PT SE**
Etats d'extension désignés:
**RO**

(30) Priorité: **24.07.1996 FR 9609310**

(43) Date de publication de la demande:
**28.01.1998 Bulletin 1998/05**

(73) Titulaire: **NORTEL NETWORKS France**
**78117 Châteaufort (FR)**

(72) Inventeurs:
• **Belveze, Fabrice**
**78310 Maurepas (FR)**

• **Lasne, Xavier**
**78650 Beynes (FR)**
• **Roseiro, Albert**
**92400 Courbevoie (FR)**

(74) Mandataire: **Loisel, Bertrand et al**
**Cabinet Plasseraud**
**65/67 rue de la Victoire**
**75440 Paris Cedex 09 (FR)**

(56) Documents cités:
**EP-A- 0 594 551       US-A- 4 328 582**
**US-A- 5 530 725**

## EP 0 821 501 B1

**Description**

La présente invention concerne un procédé de démodulation numérique.

Elle s'applique notamment à un dispositif récepteur mettant en oeuvre une technique de diversité de réception.

Les techniques de diversité sont bien connues dans le domaine de la transmission numérique. Parmi ces techniques, on peut citer :

- la diversité spatiale, utilisable notamment en transmission radio lorsque plusieurs capteurs de réception sont disposés à des emplacements différents ;
- la diversité de fréquence lorsque la même information est transmise simultanément sur des fréquences différentes ;
- la diversité temporelle en cas de répétition de la même information.

Ces différentes techniques de diversité peuvent également être combinées entre elles. L'intérêt de ces techniques est qu'elles permettent d'améliorer les taux d'erreur binaire dans les estimations produites par le dispositif récepteur. En contrepartie, elles ont généralement l'inconvénient de requérir des ressources supplémentaires, en termes de bande passante et/ou de complexité des dispositifs émetteur et récepteur.

Pour combiner les estimations multiples obtenues par le récepteur à diversité, il existe de nombreuses méthodes, parmi lesquelles on peut citer :

- la méthode de sélection consistant simplement à choisir l'observation présentant le meilleur rapport signal/bruit ;
- la méthode dite "equal gain combining", dans laquelle on prend une décision à partir de la somme des observations après mise en phase ;
- la méthode dite "maximum ratio combining", dans laquelle on prend une décision à partir de la somme des carrés des observations mises en phase et divisées par la puissance estimée des bruits dont elles sont affectées. Cette dernière méthode fournit un rapport signal/bruit maximal après recombinaison.

Il se peut que les observations disponibles ne soient pas sujettes à des perturbations (bruit, canal) complètement décorrélées (surtout en ce qui concerne le canal). Dans ce cas, les méthodes classiques de recombinaison n'obtiennent pas les résultats escomptés. Par ailleurs, en transmissions numériques, seules comptent les vraisemblances des observations et la prise de décision qui en découle, au sens du maximum de vraisemblance ; cet aspect n'apparaît pas explicitement dans les méthodes classiques.

Une méthode classique est, par exemple, décrit dans US 4,328,582.

Un but de la présente invention est de fournir une alternative, basée sur le maximum de vraisemblance, aux méthodes classiques de recombinaisons d'estimations affectées de perturbations différentes.

L'invention propose ainsi un procédé de démodulation numérique, dans lequel un dispositif récepteur effectue N démodulations distinctes ($N \geq 2$) fournissant chacune des estimations respectives de symboles binaires successifs $a_k$ résultant d'un codage différentiel d'une séquence de bits $c_k$ transmis par un dispositif émetteur, ledit codage différentiel étant de la forme $a_k = c_k \oplus a_{f(k)}$ où $a_k$ et $c_k$ désignent le symbole binaire de rang k et le bit de rang k, f(k) désigne un entier au plus égal à k-1 et $\oplus$ désigne l'opération OU exclusif, chaque estimation d'un symbole binaire $a_k$ de rang k étant sous forme d'un nombre réel $s_k^{(i)}$ ($1 \leq i \leq N$) dont le signe représente la valeur la plus probable dudit symbole et dont le module mesure la vraisemblance de ladite valeur la plus probable. Selon l'invention, le dispositif récepteur estime la valeur d'un bit $c_k$ de rang k de la séquence en utilisant un nombre de la forme $X_k - Y_k$ où:

$$X_k = \max_{1 \leq i \leq N} \left\{ \left| s_k^{(i)} + s_{f(k)}^{(i)} \right| \right\}$$
$$Y_k = \max_{1 \leq i \leq N} \left\{ \left| s_k^{(i)} - s_{f(k)}^{(i)} \right| \right\}$$

On démontre que, dès lors que le niveau du signal utile est suffisamment grand au regard de celui du bruit d'observation, l'estimation $X_k - Y_k$ ci-dessus est proportionnelle à la vraisemblance du bit $c_k$, c'est-à-dire au logarithme du rapport des densités de probabilités du ou des signaux reçus conditionnellement au bit $c_k$ et conditionnellement au complément logique du bit $c_k$.

La démodulation globale obéit donc à la règle du maximum de vraisemblance a posteriori, même en présence d'erreurs corrélées dans les différentes estimations des symboles $a_k$.

L'invention s'applique non seulement aux recombinaisons d'estimations multiples obtenues par une technique de diversité, mais aussi au cas où deux au moins des N jeux d'estimations des symboles $a_k$ sont obtenus en démodulant un même segment de signal reçu par des méthodes différentes (un cas de figure où, typiquement, les erreurs d'estimation seront souvent corrélées).

Dans un mode de réalisation particulier, au moins deux des N démodulations distinctes sont effectuées sur un même segment de signal correspondant à une trame de symboles d'un signal numérique modulé par le dispositif émetteur, ledit segment de signal étant reçu par le dispositif récepteur après transmission du signal numérique modulé par l'intermédiaire d'un canal de transmission, la première de ces deux démodulations comprenant les étapes suivantes :

- estimation de premiers paramètres de démodulation à une première extrémité du segment ; et
- calcul de premières estimations de symboles de la trame en utilisant des premiers paramètres de démodulation estimés et du segment de signal parcouru depuis la première extrémité vers une seconde extrémité,

   et la seconde de ces deux démodulations comprenant les étapes suivantes :

- estimation de seconds paramètres de démodulation à la seconde extrémité du segment ; et
- calcul de secondes estimations de symboles de la trame en utilisant des seconds paramètres de démodulation estimés et du segment de signal parcouru depuis la seconde extrémité vers la première extrémité.

Cette façon de procéder conduit à des gains appréciables sur le taux d'erreur binaire, à partir d'une seule observation du signal.

D'autres particularités et avantages de la présente invention apparaîtront dans la description ci-après d'exemples de réalisation non limitatifs, en référence aux dessins annexés, dans lesquels :

- la figure 1 est un schéma synoptique montrant un dispositif émetteur et un dispositif récepteur mettant en oeuvre la présente invention ;
- la figure 2 est un diagramme montrant la structure de trames de signal dans un exemple de réalisation de la présente invention ;
- les figures 3 et 4 sont des organigrammes de procédures de démodulation appliquées par le dispositif récepteur dans les deux sens de démodulation ;
- la figure 5 est un graphique montrant des exemples de vraisemblances obtenues dans chaque sens de démodulation ;
- la figure 6 est un organigramme montrant une façon de combiner les estimations aller et retour selon l'invention ; et
- la figure 7 montre un autre mode de réalisation d'un dispositif récepteur selon l'invention.

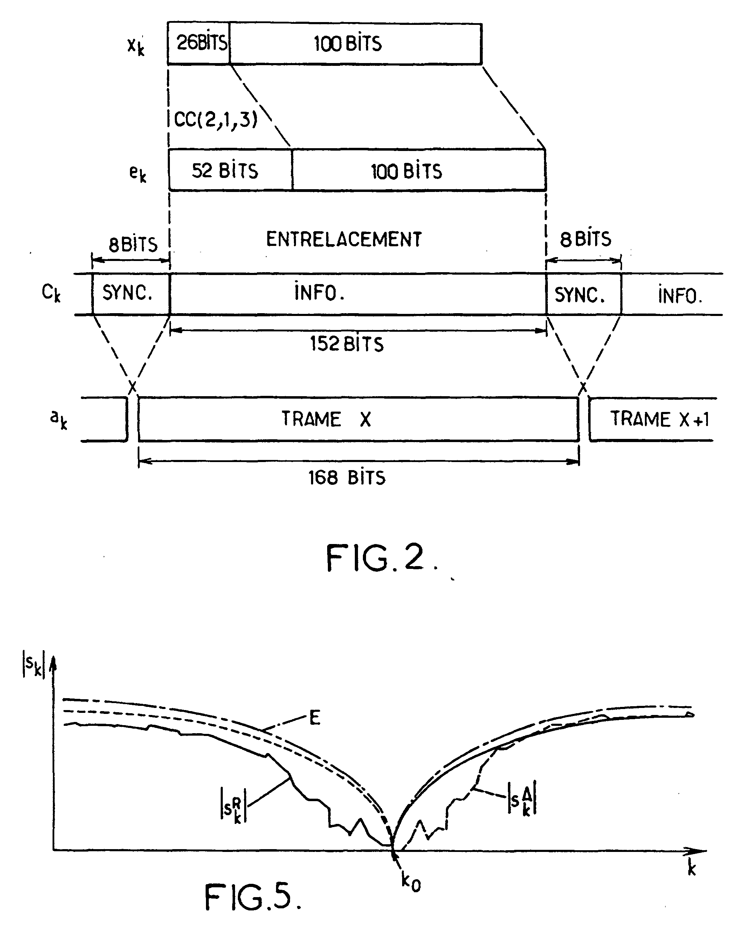

L'invention est décrite ci-après dans son application aux radiocommunications numériques entre un dispositif émetteur 10 et un dispositif récepteur 2C. Le dispositif émetteur 10 comporte un codeur source 12 (un vocodeur dans le cas d'un système de téléphonie) qui délivre un flux de données numériques $x_k$ organisées en trames successives. Dans l'exemple de réalisation illustré par la figure 2, le signal $x_k$ est organisé en trames de 126 bits à un débit 1/T=8 kbit/s.

Un codeur canal 14 traite les bits délivrés par le codeur source pour améliorer la robustesse aux erreurs de transmission. Dans l'exemple de la figure 2, le codeur canal 14 applique un code convolutif CC(2,1,3) de rendement 1/2 aux 26 premiers bits de la trame $x_k$. Les 52+100=152 bits résultants $e_k$ sont ensuite soumis à un entrelacement destiné à casser les paquets d'erreurs que peut introduire le phénomène de fading de Rayleigh. Un mot de synchronisation de 8 bits est inséré après chaque trame de 152 bits d'information entrelacés pour former le signal $c_k$ que le codeur 14 adresse au modulateur 16. Ce dernier forme le signal radio s(t) qui est amplifié puis appliqué à l'antenne 18 du dispositif émetteur 10. Dans l'exemple considéré, les symboles $c_k$ sont binaires ($c_k$=0 ou 1).

La modulation employée est par exemple une modulation GMSK avec un paramètre BT=0,25 (voir K. MUROTA et al : "GMSK modulation for digital mobile radio telephony", IEEE Trans. on Communications, Vol. COM-29, N°7, Juillet 1981, pages 1044-1050).

Le dispositif récepteur 20 comprend un démodulateur 24 recevant le signal capté par l'antenne 22 et amplifié. Le démodulateur 24 délivre des estimations des symboles émis $c_k$. Ces estimations sont notées $S_k$ dans le cas de décisions douces, et $d_k$ dans le cas de décisions dures. Si les symboles $c_k$ sont M-aires et compris entre 0 et M-1, un choix de représentation possible pour l'estimation douce $S_k$ est sous la forme :

$$S_k = p_k . \exp(2j\pi d_k/M),$$

c'est-à-dire que, dans ce cas, son argument $2\pi d_k/M$ représente la valeur la plus probable $d_k$ du symbole $c_k$, tandis que

son module $p_k$ est une mesure de la vraisemblance de cette valeur $d_k$. Dans le cas de symboles binaires (M=2), le nombre $S_k$ est réel et appelé "softbit", et son signe $2d_k$-1 donne directement la valeur la plus probable du symbole signé $2c_k$-1.

Le dispositif récepteur 20 comporte un décodeur canal 26 dual du codeur canal 14 de l'émetteur. Dans l'exemple précédemment considéré, le décodeur canal 26 opère trame par trame la permutation des bits inverse de celle correspondant à l'entrelacement appliqué par l'émetteur, et décode les 52 bits redondants en utilisant le treillis de Viterbi correspondant au code convolutif employé. Comme il est usuel en transmissions numériques, le décodage de Viterbi peut être à décisions dures lorsque le démodulateur 24 fournit seulement les $d_k$, ou à décisions douces lorsque le démodulateur 24 fournit les $S_k$.

Le décodeur canal 26 restitue les estimations $y_k$ des bits $x_k$, et les délivre à un décodeur source 28 qui remet en forme l'information transmise.

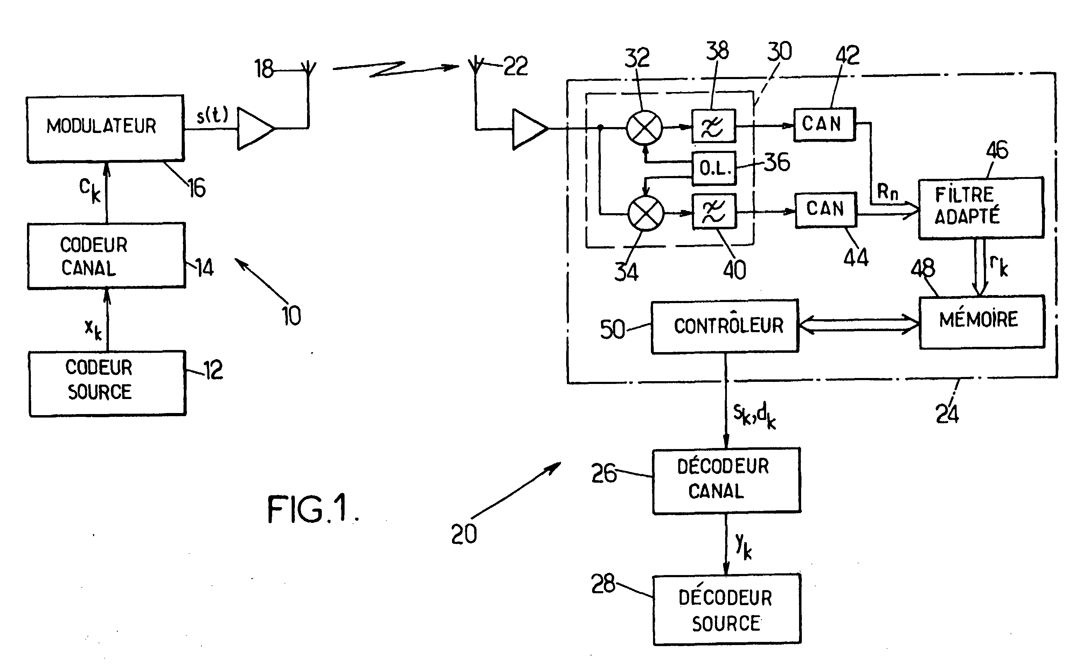

Comme le montre la figure 1, le démodulateur 24 comporte un étage radio 30 assurant la conversion en bande de base du signal reçu. Au moyen de deux mélangeurs 32, 34, le signal radio reçu est mélangé à deux ondes radio en quadrature à la fréquence porteuse délivrées par un oscillateur local 36, et les signaux résultants sont soumis à des filtres passe-bas 38, 40 pour obtenir une composante en phase et une composante en quadrature. Ces deux composantes sont échantillonnées et quantifiées par des convertisseurs analogique-numérique 42, 44 à une fréquence au moins égale à la fréquence des bits transmis. On note $R_n$ les échantillons complexes du signal numérique en bande de base délivrés par les convertisseurs 42, 44.

Dans l'exemple représenté sur la figure 1, le démodulateur 24 opère selon un algorithme séquentiel pour démoduler des symboles binaires. Dans le cas de la modulation GMSK, on peut réaliser une démodulation séquentielle en utilisant l'approximation suivante pour le signal modulé en bande de base s(t) :

$$s(t) = \sum_{k=-\infty}^{+\infty} j^k \cdot a_k \cdot h(\tau - kT) \qquad\qquad (4)$$

Cette expression correspond à une approximation au premier ordre de la décomposition proposée par P.A. LAURENT dans son article "Exact and Approximate Construction of Digital Phase Modulations by Superposition of Amplitude Modulated Pulses (AMP)", IEEE Trans. on Communications, Vol. COM-34, n°2, Février 1986, pages 150-160. Cet article explique également la méthode de calcul de la fonction h(t), qui, dans le cas de la modulation GMSK avec BT=0,25, correspond à une impulsion de largeur 2T environ centrée sur t=0. Dans l'expression (4), les symboles binaires $a_k$, de valeur $\pm 1$, correspondent aux bits $c_k$ codés différentiellement : $a_k = a_{k-1} \cdot (2c_k$-1).

Le canal radio est affecté d'évanouissements correspondant à la somme en opposition de phase de trajets multiples provoqués par différentes réflexions du signal émis sur des obstacles proches ou lointains. La dispersion temporelle de ces trajets étant usuellement de l'ordre de 12 µs, durée faible devant la durée d'un bit (T=125 µs dans l'exemple numérique considéré), on représente le canal de propagation par une variable complexe A(t) correspondant à une atténuation de Rayleigh et un déphasage avec un unique trajet. La fréquence des évanouissements est de $2f_d$, $f_d$ étant la fréquence Doppler associée à la variation de la distance entre l'émetteur et le récepteur : $f_d = f_0 \cdot v/c$, si $f_0$ est la fréquence centrale du canal, v est la vitesse relative de l'émetteur et du récepteur et c est la célérité de la lumière. On trouve alors pour une vitesse de 100 km/h une fréquence Doppler de l'ordre de 41,67 Hz dans le cas où $f_0 \simeq 450$ MHz, d'où un évanouissement (83,33 Hz) toutes les 12 ms. Ceci autorise donc plus d'un évanouissement par trame, et surtout une fréquence d'évanouissement supérieure à la fréquence des mots de synchronisation (50 Hz).

La présence de ces évanouissements rapides, et plus généralement la variation rapide du canal devant la durée de la trame, imposent une estimation fréquente du canal, et donc un risque important de propagation d'erreurs dues à la rétroaction de la boucle de décision. En effet, en cas d'erreurs sur les symboles binaires décidés lors de la démodulation, ces erreurs vont conduire à des estimations erronées du canal, qui vont elles-mêmes produire de nouvelles erreurs de démodulation.

On note $A_k = A(kT)$ (k=0 à 167) les valeurs complexes du canal de propagation échantillonnées à 8 kHz en bande de base. Le canal est en outre affecté d'un bruit blanc additif gaussien B(t) de variance N0/2, noté $B_k$ après échantillonnage et filtrage adapté. Le signal reçu, après filtrage adapté du signal par le filtre 46 de réponse h(t), est alors de la forme :

$$r_k = A(kT) \sum_{n=-\infty}^{\infty} j^n a_n \Xi((n-k)T) + B(kT)$$

$$= A_k \left[ j^{k-1} a_{k-1} H(-T) + j^k a_k H(0) + j^{k+1} a_{k+1} H(+T) \right] + B_k$$

où H(t) est la fonction d'autocorrélation connue de la fonction h(t). Dans cette expression, on a fait l'approximation consistant à négliger H(t) pour $|t| \geq 2T$, ce qui simplifie les calculs.

Les échantillons de sortie $r_k$ du filtre adapté 46 sont stockés dans une mémoire 48 pour être traités par le contrôleur 50 du démodulateur 24.

Le contrôleur 50 traite le signal filtré $r_k$ par segments correspondant chacun à une trame de 168 symboles binaires émis $a_k$ ($0 \leq k < 168$). Comme le montre la figure 2, cette trame correspond, après le codage différentiel implicite des bits $c_k$, aux 152 bits d'information d'une trame encadrés par les 8 bits du mot de synchronisation précédent et par les 8 bits du mot de synchronisation suivant.

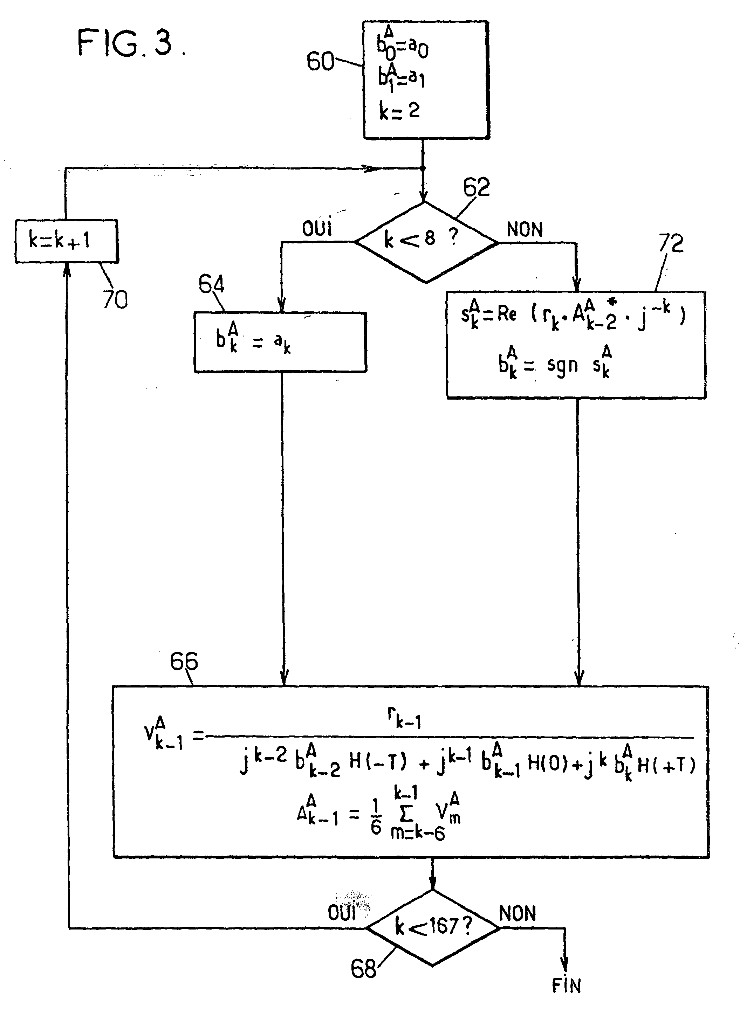

Le contrôleur 50 effectue la démodulation selon un algorithme séquentiel, dont une première phase est représentée sur l'organigramme de la figure 3. Dans cette première phase, on commence par estimer la réponse complexe du canal au début du segment, puis on démodule ce segment du début vers la fin en mettant à jour à chaque temps-bit l'estimation de la réponse complexe du canal.

A l'initialisation 60 de cette première phase, les bits $b_0^A$ et $b_1^A$ sont respectivement pris égaux aux symboles binaires connus $a_0$ et $a_1$, et l'index k est initialisé à 2. A l'étape 62, l'index k est comparé à 8, c'est-à-dire à la longueur du mot de synchronisation. Si k<8, le bit $b_k^A$ est pris égal au bit connu $a_k$ du mot de synchronisation a l'étape 64, puis on procède, à l'étape 66, à une estimation instantanée $V_{k-1}^A$ du canal de propagation, en effectuant la division complexe :

$$V_{k-1}^A = \frac{r_{k-1}}{j^{k-2} b_{k-2}^A H(-T) + j^{k-1} b_{k-1}^A H(0) + j^k b_k^A H(+T)} \tag{5}$$

Un filtrage des estimations instantanées $V_m^A$ permet de lisser les effets du bruit gaussien pour fournir l'estimation $A_{k-1}^A$ servant à la démodulation des bits. Dans l'exemple représenté sur la figure 3, ce filtrage est simplement le calcul de la moyenne arithmétique des six dernières estimations instantanées $V_m^A$. On pourrait également employer d'autres types de filtrage. Après l'étape 66, l'index k est comparé à 167 (la longueur de la trame à l'étape 68. Tant que k<167, l'index k est incrémenté d'une unité à l'étape 70 avant de revenir à l'étape 62.

L'estimation du canal au début de la trame est terminée lorsque k=8 au test 62. On dispose alors de l'estimation $A_6^A$ obtenue grâce à la connaissance du mot de synchronisation. Pour chaque valeur de $k \geq 8$, le softbit $s_k^A$ est estimé à l'étape 72 selon :

$$s_k^A = Re\left( r_k . A_{k-2}^{A\ *} . j^{-k} \right) \tag{6}$$

et l'estimation $b_k^A$ du bit $a_k$ est obtenue par le signe du softbit $s_k^A$. Ayant obtenu ce bit $b_k^A$, le contrôleur 50 réestime le canal à l'étape 66 comme exposé précédemment. La démodulation dans le sens aller est terminée lorsque k=167 lors du test 68.

On voit sur la figure 3 qu'une erreur faite sur un bit $b_k^A$ à l'étape 72, due par exemple à un évanouissement du canal ou à un bruit impulsif, provoque des distorsions dans les estimations instantanées $V_{k-1}^A$, $V_k^A$ et $V_{k+1}^A$ faites dans les trois étapes 66 suivantes, et conduit ainsi à des erreurs d'estimation du canal qui se propagent pendant un certain temps du fait du filtre de lissage. Ces erreurs dans les $A_k^A$ peuvent à leur tour générer d'autres erreurs d'estimation des bits.

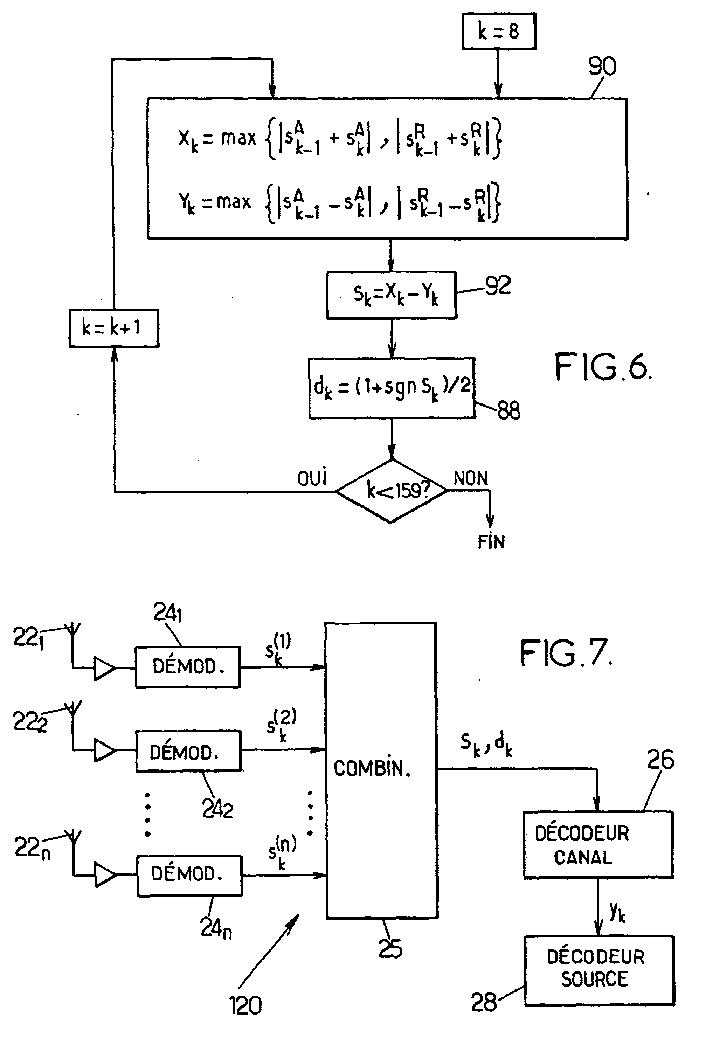

La figure 5 montre ainsi, dans le cas où le signal reçu a une énergie évoluant selon la courbe E en trait mixte (avec un évanouissement de canal survenant à l'instant $k_0$), que la vraisemblance $\left| s_k^A \right|$ des estimations (courbe en trait interrompu) est bonne avant l'évanouissement, mais met ensuite un certain temps à retrouver des valeurs en rapport avec l'énergie E du signal reçu.

Pour améliorer les performances dans la période suivant l'évanouissement, le contrôleur 50 procède à une autre démodulation du segment de signal correspondant à la trame de 168 bits depuis la fin du segment vers le début. Ceci permet d'obtenir des vraisemblances $\left| s_k^R \right|$ telles que celles représentées par la courbe en trait plein sur la figure 5. On voit que les performances du démodulateur seront améliorées si on privilégie les softbits $s_k^A$ avant l'évanouissement et les softbits $s_k^R$ après l'évanouissement.

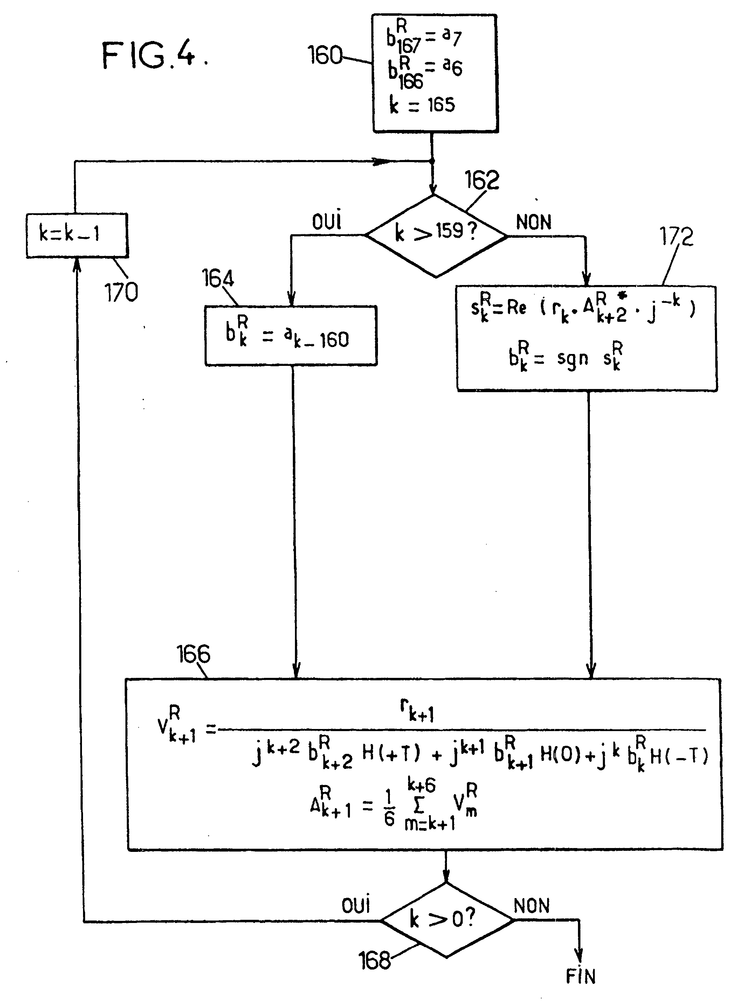

La démodulation retour s'effectue dans une seconde phase semblable à la première, dont l'organigramme est représenté sur la figure 4.

Dans cette seconde phase, on commence par estimer la réponse complexe du canal à la fin du segment, puis on démodule ce segment de la fin vers le début en mettant à jour à chaque temps-bit l'estimation de la réponse complexe du canal.

A l'initialisation 160 de cette seconde phase, les bits $b_{167}^R$ et $b_{166}^R$ sont respectivement pris égaux aux symboles binaires connus $a_7$ et $a_6$, et l'index k est initialisé à 165. A l'étape 162, l'index k est comparé à 159. Si k>159, le bit $b_k^R$ est pris égal au bit connu $a_{k-160}$ du mot de synchronisation à l'étape 164, puis procède, à l'étape 166, à une estimation instantanée $V_{k+1}^R$ du canal de propagation, en effectuant la division complexe :

$$V_{k+1}^R = \frac{r_{k+1}}{j^{k+2} b_{k+2}^R H(+T) + j^{k+1} b_{k+1}^R H(0) + j^k b_k^R H(-T)} \qquad (7).$$

Un filtrage des estimations instantanées $V_m^R$ permet de lisser les effets du bruit gaussien pour fournir l'estimation $A_{k+1}^R$ servant à la démodulation des bits. Dans l'exemple représenté sur la figure 4, ce filtrage est simplement le calcul de la moyenne arithmétique des six dernières estimations instantanées $V_m^R$. Après l'étape 166, l'index k est comparé à 0 à l'étape 168. Tant que k>0, l'index k est décrémenté d'une unité à l'étape 170 avant de revenir à l'étape 162.

L'estimation du canal à la fin de la trame est terminée lorsque k=159 au test 162. On dispose alors de l'estimation $A_{161}^R$ obtenue grâce à la connaissance du mot de synchronisation. Pour chaque valeur de k≤159, le softbit $s_k^R$ est estimé à l'étape 172 selon :

$$s_k^R = \mathrm{Re}\left(r_k . A_{k+2}^{R\,*} . j^{-k}\right) \qquad \textbf{(8)}$$

et l'estimation $b_k^R$ du bit $a_k$ est obtenue par le signe du softbit $s_k^R$. Ayant obtenu ce bit $b_k^R$, le contrôleur 50 réestime le canal à l'étape 166 comme exposé précédemment. La démodulation dans le sens retour est terminée lorsque k=0 lors du test 168.

Dans l'exemple considéré ci-dessus, les paramètres de démodulation réestimés lors du parcours du segment démodulé dans chaque sens se limitent à la réponse complexe $A_k$ du canal de propagation. On comprendra qu'ils pourraient inclure d'autres paramètres tels que des paramètres représentatifs du bruit observé sur le canal de transmission. On peut ainsi calculer pour chaque sens de démodulation une moyenne quadratique des écarts $V_{k-1}^A - A_{k-1}^A$ (étape 66) ou $V_{k+1}^R - A_{k+1}^R$ (étape 166), pour estimer la puissance instantanée du bruit $N0_k^A$, $N0_k^R$ dans chaque sens de démodulation. On peut alors normaliser la valeur du softbit $s_k^A$ ou $s_k^R$ en la divisant par cette moyenne quadratique. Les estimations de puissance $N0_k^A$, $N0_k^R$ peuvent être constantes sur la trame considérée ; ce sont alors, par exemple, des moyennes des $\left|A_{k-1}^A - V_{k-1}^A\right|^2$ et des $\left|A_{k+1}^R - V_{k+1}^R\right|^2$ calculées sur l'ensemble de la trame. Si ces moyennes sont obtenues sur des fenêtres glissantes ou par filtrage, les estimations de la puissance du bruit peuvent être instantanées, c'est-à-dire dépendre de l'index k.

La figure 6 montre une façon d'exploiter les estimations aller et retour des symboles transmis, en recherchant le maximum de vraisemblance a posteriori de la valeur des bits émis.

La valeur du softbit $S_k$ obtenue après décodage différentiel est alors :

$$S_k = X_k - Y_k \qquad (9)$$

où :

$$X_k = \max\left\{\left|s_{k-1}^A + s_k^A\right|, \left|s_{k-1}^R + s_k^R\right|\right\} \qquad \textbf{(10)}$$

$$Y_k = \max\left\{\left|s_{k-1}^A - s_k^A\right|, \left|s_{k-1}^R - s_k^R\right|\right\} \qquad \textbf{(11)}$$

ainsi que l'illustrent les étapes 90 et 92 sur la figure 6. L'estimation dure $d_k$ du bit $c_k$ est prise égale à $[1 + \mathrm{sgn}(S_k)]/2$ à l'étape 88. Ces étapes 90, 92, 98 sont exécutées pour chaque valeur de k comprises entre 8 et 159 (pour le calcul de $S_8$, on prend $s_7^A = \mathrm{Re}(r_7 . A_6^{A\,*} . j^{-7})$).

Des simulations ont permis d'observer que, par rapport à une démodulation dans un seul sens, une démodulation aller-retour combinée à une exploitation des résultats selon le maximum de vraisemblance (figure 6) conduit à une amélioration de 1,5 à 2 dB sur le taux d'erreur binaire, avec des signaux construits de façon analogue à ce qu'on a décrit en référence à la figure 2 et des valeurs courantes du rapport fréquence Doppler/fréquence bit.

On note que les estimations $S_k$ calculées aux étapes 90 et 92 de la figure 6 correspondent à un maximum de vraisemblance dans le cas où on peut considérer que le bruit d'observation est de même puissance dans les deux sens de démodulation, ce qui, en pratique, constitue généralement une approximation satisfaisante. Si on ne fait pas cette approximation, il convient de normaliser les softbits $s_k^A$, $s_k^R$ relativement à la puissance du bruit, comme exposé ci-dessus, avant de calculer les maxima selon les relations (10) et (11).

Dans l'exemple considéré ci-dessus, les symboles $a_k$ dépendent des bits $c_k$ par un codage différentiel de la forme $a_k = c_k \oplus a_{f(k)}$, où $f(k) = k-1$ et e désigne l'opération OU exclusif qui, dans le cas où les $a_k$ sont à valeurs $\pm 1$ et les $c_k$ à valeurs 0 ou 1, équivaut à $a_k = (2c_k-1).a_{f(k)}$. Dans le cas général, il suffit que la fonction entière f vérifie $f(k) \leq k-1$, les quantités $X_k$ et $Y_k$ étant :

$$X_k = \max\left\{\left|s_k^A + s_{f(k)}^A\right|, \left|s_k^R + s_{f(k)}^R\right|\right\} \qquad (12)$$

$$Y_k = \max\left\{\left|s_k^A - s_{f(k)}^A\right|, \left|s_k^R - s_{f(k)}^R\right|\right\} \qquad (13)$$

Lorsque $f(k) = k-1$, les relations (12, et (13) correspondent à (10) et (11). Un exemple d'application du codage différentiel où $f(k)$ n'est pas toujours égal à $k-1$ peut être trouvé dans la demande de brevet européen 0 774 840.

La figure 7 montre un autre exemple de dispositif récepteur apte à mettre en oeuvre la présente invention. Ce dispositif 120 fait appel à une diversité en réception qui, dans l'exemple considéré, est une diversité spatiale, le dispositif comportant n antennes $22_1,...,22_n$ et n démodulateurs associés $24_1,...,24_n$. Chaque démodulateur $24_i$ opère dans un seul sens sur un segment de signal respectif fourni par son antenne $22_i$, et délivre des softbits respectifs $s_k^{(i)}$ (normalisés ou non) pour chaque symbole $a_k$ avant le décodage différentiel. Le dispositif 120 dispose ainsi de $N=n$ estimations par symbole provenant de segments de signal différents, au lieu de $N=2$ estimations tirées du même segment de signal dans l'exemple de réalisation des figures 1 à 6.

Un module 25 combine ces différents softbits pour fournir les estimations douces $S_k$ (et/ou dures $d_k$) des bits décodés $c_k$ au décodeur canal 26. Ces combinaisons sont

$$X_k = \max_{1 \leq i \leq N}\left\{\left|s_k^{(i)} + s_{f(k)}^{(i)}\right|\right\} \qquad (14)$$

$$Y_k = \max_{1 \leq i \leq N}\left\{\left|s_k^{(i)} - s_{f(k)}^{(i)}\right|\right\} \qquad (15)$$

faites selon la relation (9) avec

La démodulation opérée par chaque démodulateur $24_i$ est par exemple conforme à l'organigramme de la figure 3, les signaux reçus différant d'un démodulateur à l'autre et étant notés $r_k^{(i)}$ après filtrage adapté, et les estimations $b_k^A$ des bits $a_k$ dans le sens aller pouvant être remplacées

$$V_{k-1}^{(i)} = \frac{r_{k-1}^{(i)}}{j^{k-2}b_{k-2}H(-T) + j^{k-1}b_{k-1}H(0) + j^k b_k H(+T)}$$

par les estimations $b_k$ de ces mêmes bits après recombinaison. Après avoir obtenu les softbits respectifs $s_k^{(i)}$ à l'étape 72, les démodulateurs $24_i$ fournissent ces softbits au module de combinaison 25 qui calcule les estimations $S_k$ et $d_k$, puis le bit $b_k$ par codage différentiel des estimations dures $d_k$, c'est-à-dire $b_k = d_k \oplus b_{f(k)}$. Le bit $b_k$ ainsi obtenu est retourné aux démodulateurs $24_i$ qui peuvent alors calculer les estimations $V_{k-1}^{(i)}$ des réponses des canaux à l'étape 72 selon :

L'invention est bien entendu applicable à d'autres techniques de diversité, ou à des récepteurs combinant une technique de diversité avec une méthode de démodulations multiples telle que celle décrite ci-dessus.

**Revendications**

1. Procédé de démodulation numérique, dans lequel un dispositif récepteur (20;120) effectue N démodulations distinctes (N≥2) fournissant chacune des estimations respectives de symboles binaires successifs ($a_k$) résultant d'un codage différentiel d'une séquence de bits ($c_k$) transmis par un dispositif émetteur (10), ledit codage différentiel étant de la forme $a_k = c_k \oplus a_{f(k)}$ où $a_k$ et $c_k$ désignent le symbole binaire de rang k et le bit de rang k, f(k) désigne un entier au plus égal à k-1 et $\oplus$ désigne l'opération OU exclusif,

   chaque estimation d'un symbole binaire ($a_k$) de rang k étant sous forme d'un nombre réel $s_k^{(i)}$ (1≤i≤N) dont le signe représente la valeur la plus probable dudit symbole et dont le module mesure la vraisemblance de ladite valeur la plus probable,

   **caractérisé en ce que** le dispositif récepteur (20;120) estime la valeur d'un bit ($c_k$) de rang k de la séquence en utilisant un nombre de la forme $X_k - Y_k$ où :

$$X_k = \max_{1 \le i \le N} \left\{ \left| s_k^{(i)} + s_{f(k)}^{(i)} \right| \right\}$$
$$Y_k = \max_{1 \le i \le N} \left\{ \left| s_k^{(i)} - s_{f(k)}^{(i)} \right| \right\}$$

2. Procédé selon la revendication 1, **caractérisé en ce que** le dispositif récepteur (20) produit une estimation dure de chaque bit ($c_k$) de rang k en utilisant le signe du nombre $X_k - Y_k$.

3. Procédé selon la revendication 1 ou 2, **caractérisé en ce qu'**au moins deux des N démodulations distinctes sont effectuées sur un même segment de signal correspondant à une trame de symboles ($a_k$) d'un signal numérique modulé par le dispositif émetteur (10), ledit segment de signal (r(t)) étant reçu par le dispositif récepteur (20) après transmission du signal numérique modulé (s't)) par l'intermédiaire d'un canal de transmission, **en ce que** la première de ces deux démodulations comprend les étapes suivantes :

   - estimation de premiers paramètres de démodulation ($A_k^A$) à une première extrémité du segment ; et
   - calcul de premières estimations ($s_k^A$, $b_k^A$) de symboles de la trame en utilisant des premiers paramètres de démodulation estimés et du segment de signal parcouru depuis la première extrémité vers une seconde extrémité,

   et **en ce que** la seconde de ces deux démodulations comprend les étapes suivantes :

   - estimation de seconds paramètres de démodulation ($A_k^R$) à la seconde extrémité du segment ; et
   - calcul de secondes estimations ($s_k^R$, $b_k^R$) de symboles de la trame en utilisant des seconds paramètres de démodulation estimés et du segment de signal parcouru depuis la seconde extrémité vers la première extrémité.

4. Procédé selon la revendication 3, **caractérisé en ce que** les premiers paramètres de démodulation sont réestimés au moins une fois lors du parcours du segment à partir de la première extrémité, et les seconds paramètres de démodulation sont réestimés au moins une fois lors du parcours du segment à partir de la seconde extrémité.

5. Procédé selon la revendication 3 ou 4, **caractérisé en ce que** les premiers et seconds paramètres de démodulation comprennent chacun au moins un paramètre ($A_k^A$, $A_k^R$) représentant la réponse du canal de transmission.

6. Procédé selon la revendication 5, **caractérisé en ce que** le dispositif récepteur (20) estime lesdits paramètres représentant la réponse du canal de transmission aux extrémités du segment sur la base de séquences de synchronisation incluses dans les trames de signal numérique.

7. Procédé selon l'une quelconque des revendications 3 à 6, **caractérisé en ce que** les premiers et seconds paramètres de démodulation comprennent chacun au moins un paramètre relatif au bruit observé sur le canal de transmission.

8. Procédé selon la revendication 7, **caractérisé en ce que** les premiers paramètres de démodulation comprennent la puissance du bruit dont l'estimation ($N0_k^A$) est utilisée pour normaliser les premières estimations des symboles de la trame, et **en ce que** les seconds paramètres ce démodulation comprennent la puissance du bruit dont l'estimation ($N0_K^R$) est utilisée pour normaliser les secondes estimations des symboles de la trame.

9. Procédé selon l'une quelconque des revendications 1 à 8, **caractérisé en ce qu'**au moins deux des N démodulations distinctes sont effectuées sur deux segments de signal respectifs, reçus par le dispositif récepteur (120) selon une technique de diversité.

**Patentansprüche**

1. Verfahren zur digitalen Demodulation, bei dem eine Empfangsvorrichtung (20; 120) N verschiedene Demodulationen (N 2) ausführt, die jeweils entsprechende Schätzungen von aufeinander folgenden binären Symbolen ($a_k$) liefern, die aus einer differentiellen Codierung einer Folge von Bit ($c_k$) resultieren, die durch eine Sendevorrichtung (10) übertragen werden, wobei die differentielle Codierung von der Form $a_k = c_k \oplus a_{f(k)}$ ist, wobei $a_k$ und $c_k$ das binäre Symbol vom Rang k und das Bit vom Rang k bezeichnen, f(k) eine ganze Zahl höchstens gleich k-1 und $\oplus$ die EXKLUSIV-ODER Operation bezeichnet,

wobei jede Schätzung eines binären Symbols ($a_k$) vom Rang k die Form einer reelen Zahl $s_k^{(i)}$ (1 i N) hat, deren Vorzeichen den wahrscheinlichsten Wert des Symbols darstellt und deren Betrag die Wahrscheinlichkeit des wahrscheinlichsten Werts misst,

**dadurch gekennzeichnet, dass** die Empfangsvorrichtung (10; 120) den Wert eines Bit ($c_k$) der Folge vom Rang k unter Verwendung einer Zahl der Form $X_k$-$Y_k$ schätzt, wobei:

$$X_k = \left| \max_{1 \le i \le N} \left\{ \left| s_k^{(i)} + s_{f(k)}^{(i)} \right| \right\} \right.$$
$$Y_k = \left| \max_{1 \le i \le N} \left\{ \left| s_k^{(i)} - s_{f(k)}^{(i)} \right| \right\} \right.$$

2. Verfahren nach Anspruch 1, **dadurch gekennzeichnet, dass** die Empfangsvorrichtung (20) eine strenge Schätzung jedes Bit ($c_k$) vom Rank k unter Verwendung des Vorzeichens der Zahl $X_k$-$Y_k$ erzeugt.

3. Verfahren nach Anspruch 1 oder 2, **dadurch gekennzeichnet, dass** zumindest zwei der N verschiedenen Demodulationen auf dem gleichen Signalsegment durchgeführt werden, das einem Datenübertragungsblock von Symbolen ($a_k$) eines durch die Sendevorrichtung (10) modulierten digitalen Signals entspricht, wobei das Signalsegment (r(t)) durch die Empfangsvorrichtung (20) nach der Übertragung des modulierten digitalen Signals (s'(t)) über einen Übertragungskanal empfangen wird, und dass die erste dieser zwei Demodulationen die folgenden Schritte umfasst:

- Schätzen von ersten Demodulationsparametern ($A_k^A$) an einem ersten Ende des Segments und
- Berechnen von ersten Schätzungen ($s_k^A$, $b_k^A$) von Symbolen des Datenübertragungsblocks unter Verwendung der ersten geschätzten Demodulationsparameter und des vom ersten Ende zum zweiten Ende durchlaufenen Signalsegments,

und dass die zweite dieser zwei Demodulationen die folgenden Schritte umfasst:

- Schätzen von zweiten Demodulationsparametern ($A_k^R$) am zweiten Ende des Segments und
- Berechnen von zweiten Schätzungen ($s_k^R$, $b_k^R$) von Symbolen des Datenübertragungsblocks unter Verwendung der zweiten geschätzten Demodulationsparameter und des vom zweiten Ende zum ersten Ende durchlaufenen Signalsegments.

4. Verfahren nach Anspruch 3, **dadurch gekennzeichnet, dass** die ersten Demodulationsparameter zumindest einmal während des Durchlaufens des Segments vom ersten Ende aus und die zweiten Demodulationsparamter zumindest einmal während des Durchlaufens des Segments vom zweiten Ende aus von neuem geschätzt werden.

5. Verfahren nach Anspruch 3 oder 4, **dadurch gekennzeichnet, dass** die ersten und zweiten Demodulationsparameter jeweils zumindest einen Parameter ($A_k^A$, $A_k^R$) umfassen, der das Übertragungsverhalten des Übertragungskanals wiedergibt.

6. Verfahren nach Anspruch 5, **dadurch gekennzeichnet, dass** die Empfangsvorrichtung (20) die Parameter, die das Übertragungsverhalten des Übertragungskanals wiedergeben, an den Enden des Segments auf der Basis von in den Digitalsignal-Datenübertragungsblöcken enthaltenen Synchronisationssequenzen schätzt.

7. Verfahren nach einem der Ansprüche 3 bis 6, **dadurch gekennzeichnet, dass** die ersten und zweiten Demodulationsparameter jeweils zumindest einen Parameter umfassen, der das beobachtete Rauschen auf dem Übertragungskanal betrifft.

8. Verfahren nach Anspruch 7, **dadurch gekennzeichnet, dass** die ersten Demodulationsparameter die Rauschleistung umfassen, deren Schätzung ($NO_k^A$) dazu verwendet wird, die ersten Schätzungen der Symbole des Datenübertragungsblocks zu normieren, und dass die zweiten Demodulationsparameter die Rauschleistung umfassen, deren Schätzung ($NO_k^R$) dazu verwendet wird, die zweiten Schätzungen der Symbole des Datenübertragungsblocks zu normieren.

9. Verfahren nach einem der Ansprüche 1 bis 8, **dadurch gekennzeichnet, dass** zumindest zwei der N verschiedenen Demodulationen auf zwei entsprechenden Signalsegmenten ausgeführt werden, die durch die Empfangsvorrichtung (120) gemäß einer Diversity-Technik empfangen werden.

**Claims**

1. Method of digital demodulation, in which a receiving device (20;120) performs N separate demodulations ($N\geq2$) each supplying respective estimates of successive binary symbols ($a_k$) resulting from differential coding of a sequence of bits ($C_k$) sent by a transmitting device (10), the said differential coding being of the form $a_k=c_k \oplus a_{f(k)}$ where $a_k$ and $c_k$ designate the binary symbol at position k and the bit at position k, f (k) designates an integer equal to k-1 at most and $\oplus$ designates the exclusive-OR operation,

each estimate of a binary symbol ($a_k$) at position k being in the form of a real number $s_k^{(i)}$ ($1\leq i\leq N$) the sign of which represents the most probable value of the said symbol and the modulus of which measures the likelihood of the said most probable value,

**characterized in that** the receiving device (20;120) estimates the value of a bit $C_k$ at position k of the sequence by using a number of the form $X_k$-$Y_k$ where:

$$X_k = \max_{1 \leq i \leq N} \{ | s_k^{(i)} + s_{f(k)}^{(i)} | \}$$

$$Y_k = \max_{1 \leq i \leq N} \{ | s_k^{(i)} - s_{f(k)}^{(i)} | \}$$

2. A method according to Claim 1, **characterized in that** the receiving device (20) produces a hard estimate of each bit ($C_k$) at position k by using the sign of the number $X_k$-$Y_k$.

3. Method according to Claim 1 or 2, **characterized in that** at least two of the N separate demodulations are performed on the same signal segment corresponding to a frame of symbols ($a_k$) of a digital signal modulated by the transmitting device (10), the said signal segment (r(t)) being received by the receiving device (20) after sending of the modulated digital signal (s(t)) via a transmission channel, **in that** the first of these two demodulations comprises the following stages:

- estimation of first demodulation parameters ($A_k^A$) at a first end of the segment; and
- calculation of first estimates ($s_k^A$, $b_k^A$) of symbols of the frame by using the first estimated demodulation parameters and of the signal segment covered from the first end to a second end,

and **in that** the second of these two demodulations comprises the following stages:

- estimation of second demodulation parameters $(A_k^R)$ at the second end of the segment; and
- calculation of second estimates $(s_k^R, b_k^R)$ of symbols of the frame by using the second estimated demodulation parameters and of the signal segment covered from the second end towards the first end.

4. Method according to Claim 3, **characterized in that** the first demodulation parameters are re-estimated at least once whilst covering the segment from the first end, and the second demodulation parameters are re-estimated at least once whilst covering the segment from the second end.

5. Method according to Claim 3 or 4, **characterized in that** the first and second demodulation parameters each comprise at least one parameter $(A_k^A, A_k^R)$ representing the response of the transmission channel.

6. Method according to Claim 5, wherein the receiving device estimates the said parameters representing the response of the transmission channel at the ends of the segments on the basis of synchronisation sequences included in the digital signal frames.

7. Method according to any one of Claims 3 to 6, **characterized in that** the first and second demodulation parameters each comprise at least one parameter relating to the noise observed on the transmission channel.

8. Method according to Claim 7, **characterized in that** the first demodulation parameters comprises the power of the noise, the estimate $(NO_k^A)$ of which is used to normalise the first estimates of the symbols of the frame, and **in that** the second demodulation parameters comprise the power of the noise the estimate $(NO_k^R)$ of which is used to normalise the second estimates of the symbols of the frame.

9. Method according to any one of Claims 1 to 8, **characterized in that** at least two of the N separate demodulations are performed over two respective signal segments received by the receiving device (120) according to a diversity technique.

FIG.1.

FIG.2.

FIG.5.

FIG.3.

$$b_0^A = a_0$$

$$b_1^A = a_1$$

$$k = 2$$

60

70

$$k = k+1$$

62

$$k < 8 ?$$

OUI    NON

64

$$b_k^A = a_k$$

72

$$s_k^A = Re\ (r_k \cdot A_{k-2}^{A\ *} \cdot j^{-k})$$

$$b_k^A = sgn\ s_k^A$$

66

$$v_{k-1}^A = \frac{r_{k-1}}{j^{k-2}\ b_{k-2}^A\ H(-T) + j^{k-1}\ b_{k-1}^A\ H(0) + j^k\ b_k^A\ H(+T)}$$

$$A_{k-1}^A = \frac{1}{6} \sum_{m=k-6}^{k-1} v_m^A$$

OUI

$$k < 167 ?$$

NON

68

FIN

FIG.4.

160 — $\begin{array}{l} b_{167}^{R} = a_7 \\ b_{166}^{R} = a_6 \\ k = 165 \end{array}$

162

$k > 159\ ?$   OUI / NON

$k = k - 1$

170

164 — $b_k^R = a_{k-160}$

172

$\begin{array}{l} s_k^R = \mathrm{Re}\ (\,r_k \cdot A_{k+2}^{R\ *} \cdot j^{-k}\,) \\ b_k^R = \mathrm{sgn}\ s_k^R \end{array}$

166 —

$$V_{k+1}^{R} = \frac{r_{k+1}}{j^{k+2}\, b_{k+2}^{R}\, H(+T) + j^{k+1}\, b_{k+1}^{R}\, H(0) + j^{k}\, b_{k}^{R}\, H(-T)}$$

$$A_{k+1}^{R} = \frac{1}{6} \sum_{m=k+1}^{k+6} V_m^R$$

$k > 0\ ?$   OUI / NON

168

FIN

$k = 8$

90

$$X_k = \max \left\{ \left| s_{k-1}^A + s_k^A \right|, \left| s_{k-1}^R + s_k^R \right| \right\}$$

$$Y_k = \max \left\{ \left| s_{k-1}^A - s_k^A \right|, \left| s_{k-1}^R - s_k^R \right| \right\}$$

$S_k = X_k - Y_k$ ──92

$k = k+1$

$d_k = (1 + \text{sgn}\, S_k)/2$ ──88

OUI ── $k < 159?$ ── NON

FIN

FIG.6.

$22_1$ $24_1$ DÉMOD. $s_k^{(1)}$

$22_2$ DÉMOD. $s_k^{(2)}$ ── $24_2$

$22_n$ DÉMOD. $s_k^{(n)}$ ── $24_n$

COMBIN. ── 25

$S_k, d_k$

120

FIG.7.

DÉCODEUR CANAL ── 26

$y_k$

DÉCODEUR SOURCE ── 28